# EUROPÄISCHE PATENTANMELDUNG

(11) **EP 2 022 381 A2**
(43) Veröffentlichungstag der Anmeldung: **11.02.2009**
(21) Anmeldenummer: 08012189.0
(22) Anmeldetag: 05.07.2008
(51) Int. Cl.: A47J 37/06

(54) **Gargerät zur Anordnung an einer im Wesentlichen horizontal verlaufenden Arbeitsplatte oder dergleichen**

(30) Priorität: 10.08.2007 DE 102007038040
(71) Anmelder: Miele & Cie. KG, 33332 Gütersloh (DE)
(72) Erfinder: Ellersiek, Ralf, 32257 Bünde (DE); Gapp, Andreas, 6082 Ellbögen (AT); Hahn, Uwe, 33332 Gütersloh (DE); Stüttem, Marco, 59302 Oelde (DE); Zorn, Markus, 6141 Schönberg (AT)

(57) **Zusammenfassung**

Die Erfindung betrifft ein Gargerät (1) zur Anordnung an einer im Wesentlichen horizontal verlaufenden Arbeitsplatte (2) oder dergleichen, mit einer Tragvorrichtung (18), an der eine Abstellplatte (20) für Gargüter und eine Heizeinheit (16) angeordnet sind, wobei die Tragvorrichtung (18) mittels eines manuellen oder automatischen Antriebs (8) im Wesentlichen vertikal zur Arbeitsplatte (2) zwischen einer Ruhelage und einer Betriebslage hin und her bewegbar ist,
dadurch gekennzeichnet,
dass in der Ruhelage zumindest die Abstellplatte (20) eine geringere Höhenlage als die Arbeitsplattenoberseite aufweist und die Abstellplatte (20) und die Heizeinheit (16) relativ zueinander beweglich an der Tragvorrichtung (18) gehalten sind.

## Beschreibung

Gargerät zur Anordnung an einer im Wesentlichen horizontal verlaufenden Arbeitsplatte oder dergleichen

Die Erfindung betrifft ein Gargerät zur Anordnung an einer im Wesentlichen horizontal verlaufenden Arbeitsplatte gemäß der im Oberbegriff des Anspruchs 1 genannten Art.

Aus der DE 296 10 240 U1 ist ein in der Fachwelt als Salamander bezeichnetes Gargerät zum Bräunen, Gratinieren, Grillen, Toasten Überbacken, Erhitzen, Warmhalten und dergleichen von Speisen bekannt.

In Weiterbildung des beispielsweise aus der DE 296 10 240 U1 bekannten Salamanders schlägt die DE 103 54 127 A1 eine spezielle Lagerung der Heizeinrichtung an der Tragvorrichtung vor. Bei dem hieraus bekannten Salamander ist die Heizeinrichtung an der Tragvorrichtung höhenverstellbar und die Abstellplatte daran fix gehalten, so dass sich der vertikale Abstand zwischen der Abstellplatte für das Gargut und der Heizeinrichtung einstellen lässt.

Ferner zeigt die DE 26 57 746 A1 ein als Backofen ausgebildetes Gargerät zur Anordnung an einer im Wesentlichen horizontal verlaufenden Arbeitsplatte, mit einer als Backmuffel ausgebildeten Tragvorrichtung, an der mehrere als Einschubbleche ausgebildete Abstellplatten für Gargüter und eine Heizeinheit, die aus der Decke der Backmuffel sowie einem daran angeordneten Grillheizkörper gebildet ist, angeordnet. Die Tragvorrichtung ist mittels eines manuellen oder automatischen Antriebs im Wesentlichen vertikal zur Arbeitsplatte zwischen einer Ruhelage und einer Betriebslage hin und her bewegbar, wobei in der Betriebslage zumindest die Abstellplatte eine geringere Höhenlage als die Arbeitsplattenoberseite aufweist.

Der Erfindung stellt sich somit das Problem ein Gargerät anzugeben, das bei Nichtgebrauch, also in der Ruhelage, einen möglichst geringen Stauraumbedarf hat.

Erfindungsgemäß wird dieses Problem durch ein Gargerät mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben dem geringen Stauraumbedarf bei Nichtgebrauch, also in der Ruhelage, insbesondere in der Möglichkeit, das Gargerät in dessen Ruhelage für den Benutzer möglichst wenig sichtbar zu gestalten. Auf diese Weise ist der optische Gesamteindruck an dem Aufstellungsort des Gargeräts verbessert. Das Gargerät kann derart gestaltet sein, dass es sich zumindest in der Ruhelage der Tragvorrichtung unauffällig in die übrige Küche oder dergleichen einfügt. Insbesondere ist dies erreicht, wenn unterhalb der Arbeitsplatte Unterschränke vorhanden sind, in die das Gargerät eingebaut ist und in die es in der Ruhelage eingefahren werden kann. Alternativ zu Unterschränken sind auch Möbel für andere Einbaugeräte, insbesondere Kücheneinbaugeräte, denkbar. Auf diese Weise lässt sich der vorhandene Platz noch besser ausnutzen. Alternativ hierzu wäre es jedoch auch möglich, dass das Gargerät ein eigenes, freistehendes Gehäuse aufweist und nicht in Kombination mit einer Küchenarbeitsplatte oder Kücheneinbaugeräten oder anderen Möbeln verwendet wird.

Eine vorteilhafte Weiterbildung der erfindungsgemäßen Lehre sieht vor, dass die Abstellplatte oder die Heizeinheit in vertikaler Richtung fixiert an der Tragvorrichtung befestigt ist. Hierdurch ist das erfindungsgemäße Gargerät auf konstruktiv besonders einfache Weise realisiert.

Grundsätzlich ist es möglich, dass die Abstellplatte und die Heizeinheit separat, beispielsweise durch zwei unabhängige Elektromotore, voneinander bewegt werden. Vorteilhafterweise sind die Abstellplatte und die Heizeinheit über eine Kupplung und in Abhängigkeit der Höhenlage der Tragvorrichtung lösbar verbunden. Hierdurch ist es möglich, einen einzigen Antrieb sowohl für die Abstellplatte wie auch für die Heizeinheit zu verwenden.

Eine vorteilhafte Weiterbildung der vorgenannten Ausführungsform sieht vor, dass die Kupplung an der Abstellplatte oder der Heizeinheit einen Riegel aufweist, der über ein Federelement in Richtung der Entriegelungslage vorgespannt ist. Hierdurch ist die Kupplung auf konstruktiv einfache und robuste Weise realisiert.

Grundsätzlich ist die relative Lage von Abstellplatte und Heizeinrichtung in der Ruhelage, der Betriebslage und den Zwischenlagen in weiten geeigneten Grenzen frei wählbar. Besonders vorteilhaft ist, wenn die Abstellplatte und die Heizeinheit in der Ruhelage der Tragvorrichtung im Wesentlichen aneinander anliegen. Auf diese Weise ist der Stauplatzbedarf in der Ruhelage auf ein Minimum reduziert, so dass der damit gewonnene Raum für andere Funktionen oder durch andere Geräte, wie beispielsweise andere Küchengeräte, genutzt werden kann.

Eine besonders vorteilhafte Weiterbildung sieht vor, dass die Höhenlage der Tragvorrichtung mittels zumindest eines Lagesensors erfassbar und in Abhängigkeit der Messsignale mittels einer elektrischen Steuerung des Gargeräts die Heizung der Heizeinheit schaltbar ist. Hierdurch ist es möglich, die Heizung automatisch einzuschalten, beispielsweise bei der Überführung der Tragvorrichtung in die Betriebslage, und die Heizung automatisch auszuschalten, beispielsweise bei der Überführung in die Ruhelage. Die Betätigung von Bedienelementen, wie beispielsweise einer Ein-/Aus-Taste, ist somit nicht mehr zwingend erforderlich.

Grundsätzlich ist der Antrieb nach Art, Leistung und Anordnung in weiten geeigneten Grenzen frei wählbar. Vorteilhafterweise ist der Antrieb als ein elektrischer Antrieb ausgebildet, der über ein Bedienelement einschaltbar ist. Hierdurch ist der Bedienkomfort, beispielsweise gegenüber eines manuell betätigbaren Antriebs verbessert.

Eine vorteilhafte Weiterbildung der vorgenannten Ausführungsform sieht vor, dass die Temperatur der Heizeinheit mittels eines Temperatursensors erfassbar und in Abhängigkeit der Messsignale mittels der elektrischen Steuerung des Gargeräts der Antrieb der Tragvorrichtung schaltbar ist. Somit ist gewährleistet, dass beispielsweise das Gargerät nicht in ungewünschter Weise vollständig in ein Einbaumöbel versenkt werden kann, obwohl die Temperatur der Heizung und damit der Heizeinheit noch über einem vorher festgelegten Maximalwert liegt. Auf diese Weise ist die Sicherheit des Gargeräts deutlich verbessert.

Eine andere vorteilhafte Weiterbildung sieht vor, dass die Abstellplatte einen Unterbau und eine darauf auflegbare Deckplatte aufweist, wobei der Strompfad zum Antrieb und zur Heizung bei nicht aufgelegter Deckplatte auch bei in Einschaltlage befindlichem Bedienelement unterbrochen ist. Hierdurch ist sichergestellt, dass das Gargerät nicht ohne Deckplatte, auf die das Gargut aufgelegt werden soll, in Betrieb genommen werden kann.

Eine weitere vorteilhafte Weiterbildung sieht vor, dass der eingeschaltete Antrieb in Abhängigkeit des Stromanstiegs automatisch ausschaltbar ist. Auf diese Weise ist mit einfachen konstruktiven und schaltungstechnischen Mitteln beispielsweise ein sogenannter Klemmschutz oder auch ein Überlastschutz realisiert.

Ein Ausführungsbeispiel der Erfindung ist in den Zeichnungen rein schematisch dargestellt und wird nachfolgend näher beschrieben. Es zeigt
- Figur 1: ein erfindungsgemäßes Gargerät in einer perspektivischen Draufsicht, mit der Tragvorrichtung in der Ruhelage,
- Figur 2: das Gargerät aus Fig. 1 in ähnlicher Darstellung und mit der Tragvorrichtung in einer Betriebslage,
- Figur 3: das Gargerät aus Fig. 2 in teilweiser Unteransicht mit Blickrichtung auf die Heizeinheit,
- Figur 4-7: das Gargerät aus Fig. 1 in geschnittenen Seitenansichten und in verschiedenen Höhenlagen der Tragvorrichtung und
- Figur 8-13: das Gargerät aus Fig. 1 in teilweiser Darstellung im Bereich der Tragvorrichtung und in verschiedenen Höhenlagen, wechselweise in perspektivischen und in geschnittenen Ansichten.

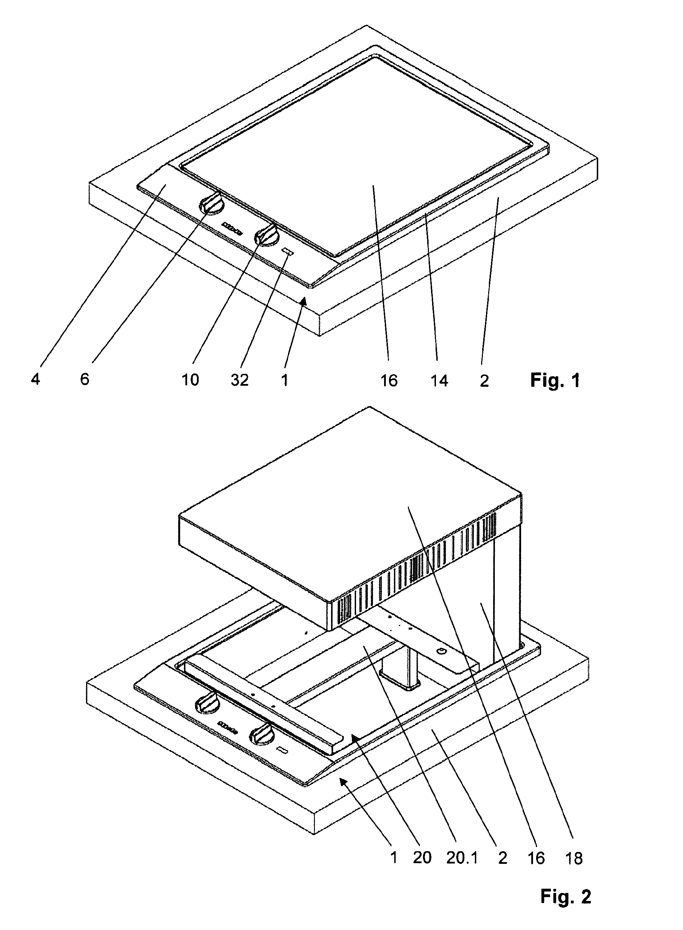

In Fig. 1 ist ein erfindungsgemäßes Gargerät 1 in der Einbaulage in eine als Küchenarbeitsplatte ausgebildete Arbeitsplatte 2 gezeigt. Das Gargerät 1 weist eine Bedienblende 4 mit einem als Bedienknebel ausgebildeten Bedienelement 6 für das Ein- und Ausschalten des in den weiteren Fig. näher dargestellten Antriebs 8 auf. Der Antrieb 8 ist hier als ein elektrischer Antrieb mit Elektromotor ausgebildet. Das andere als Bedienknebel ausgebildete Bedienelement 10 dient zur Einstellung der Heizleistung der ebenfalls in den weiteren Fig. näher dargestellten Heizung 12. Die Bedienblende 4 ist Teil eines umlaufenden Rahmens 14 des Gargeräts 1, in dessen Mitte ist die Oberseite der Heizeinheit 16 zu sehen. Wie aus Fig. 1 hervorgeht, schließen die Oberseite des Gargeräts 1 und die Oberseite der Arbeitsplatte 2 fast bündig ab; lediglich ein kleiner umlaufender Rand, wie beispielsweise von autarken Haushaltskochfeldern bekannt, bleibt. Die in den weiteren Fig. näher dargestellte Tragvorrichtung 18 befindet sich in der Ruhelage.

Betätigt der Benutzer den Bedienknebel 6 durch eine Drehung im Uhrzeigersinn, fährt die Tragvorrichtung 18 aus der in Fig. 1 dargestellten Ruhelage der Tragvorrichtung 18 in eine Betriebslage, wie beispielsweise in Fig. 2 gezeigt. Die Bewegung der Tragvorrichtung 18 wird hier allein durch ein einmaliges Verdrehen des Bedienknebels 6 im Uhrzeigersinn ausgelöst und auch ohne eine weitere Betätigung des Bedienknebels 6 fortgeführt, bis die maximale Höhenlage der Tragvorrichtung 18 erreicht ist. Details hierzu werden anhand der weiteren Fig. erläutert. Wird der Bedienknebel 6 während der Überführung in eine der Betriebslagen im Gegenuhrzeigersinn gedreht, wird der Antrieb 8 ausgeschaltet und die Tragvorrichtung 18 verbleibt in der bis dahin erreichten Höhenlage.

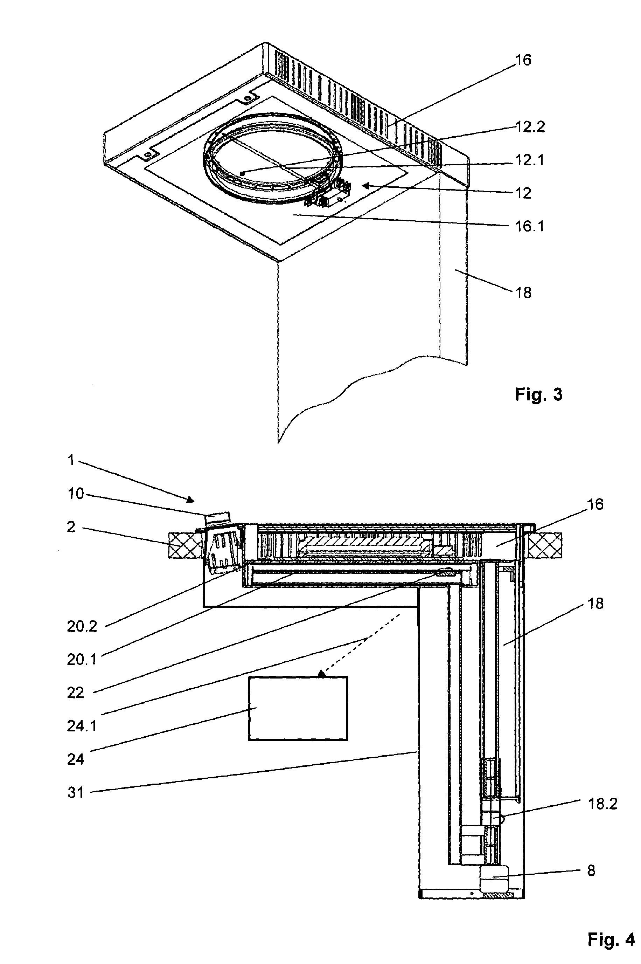

Eine Abstellplatte 20 für Gargut weist einen in Fig. 2 dargestellten Unterbau 20.1 und eine in Fig. 2 nicht dargestellte Deckplatte 20.2 zur Auflage des nicht dargestellten Garguts auf. Anders als in Fig. 2 dargestellt, ist eine Bewegung der Tragvorrichtung 18 überhaupt nur dann möglich, wenn die Deckplatte 20.2 auf den Unterbau 20.1 aufgelegt ist. Hierfür sorgt ein in Fig. 4 bis 7 näher dargestellter Magnetschalter 22, der in eine in Fig. 4 symbolisch dargestellte elektrische Steuerung 24 des Gargeräts 1 integriert ist und dessen Funktionsweise an sich bekannt ist. Der Magnetschalter 22 verhindert hier bei nicht aufgelegter Deckplatte 20.2 zum einen das Einschalten des Antriebs 8 für die Tragvorrichtung 18 und zwar unabhängig davon, ob der Bedienknebel 6 betätigt worden ist. Zum anderen verhindert er, dass die Heizung 12 bei nicht aufgelegter Deckplatte 20.2 mittels des Bedienknebels 10 auf an sich bekannte Weise eingeschaltet werden kann.

Als zusätzliche Sicherheit ist hier in der Schaltung der elektrischen Steuerung 24 vorgesehen, dass die Heizung 12 auch nach dem Auflegen der Deckplatte 20.2 in einer Betriebslage der Tragvorrichtung 18 erst mit der Überführung der Tragvorrichtung 18 in die Ruhelage mit anschließender Überführung in eine Betriebslage eingeschaltet werden kann. Dies gilt bei dem vorliegenden Ausführungsbeispiel auch bei einem Stromausfall; auch in diesem Fall wird die Heizung 12 nach der Wiederherstellung der Stromversorgung trotz eingestellter Heizleistung erst nach einer erneuten Überführung der Tragvorrichtung 18 in die Ruhelage mit anschließender Überführung in eine Betriebslage eingeschaltet.

Eine weitere Sicherheitsfunktion des vorliegenden Ausführungsbeispiels besteht darin, dass der Bedienknebel 6 für die Überführung der Tragvorrichtung 18 in die Ruhelage dauerhaft betätigt werden muss; der Benutzer muss den Bedienknebel 6 gegen den Uhrzeigersinn verdrehen und gegen eine selbsttätige Rückstellkraft, beispielsweise eine Feder oder dergleichen, in dieser Lage halten, damit der Antrieb 8 bestromt bleibt. Eine derartige Funktion wird auch als Totmann-Schaltung bezeichnet.

Um den Benutzerkomfort zu erhöhen erfolgt hier die Einschaltung der Heizung 12 automatisch mit der Überführung der Tragvorrichtung 18 in eine Betriebslage, sofern vorher mit dem Bedienknebel 10 bereits eine Heizleistung ausgewählt worden ist.

Wie aus Fig. 2 deutlich hervorgeht, ist die Heizeinrichtung 16 bei dem vorliegenden Ausführungsbeispiel fest mit der Tragvorrichtung 18 verbunden, so dass die Heizeinrichtung 16 vertikal fixiert an der Tragvorrichtung 18 angeordnet ist.

Fig. 3 zeigt die Heizeinrichtung 16 in einer Unteransicht mit Blick auf die Heizung 12. Die Heizung 12 ist hier als eine elektrische Strahlungsheizung ausgebildet. Grundsätzlich sind jedoch auch andere Beheizungsarten, wie beispielsweise Gas oder Halogenlampen, denkbar. Zwecks besserer Reinigung und als Berührschutz ist die Heizung 12 nach unten durch eine für Wärmestrahlung durchlässige Abdeckung 16.1, beispielsweise Glas oder Glaskeramik, abgedeckt.

In den Fig. 4 bis 7 ist das in die Arbeitsplatte 2 eingebaute Gargerät 1 in geschnittenen Seitenansichten dargestellt, so dass die Tragvorrichtung 18 und der dazugehörige Hubmechanismus sichtbar sind.

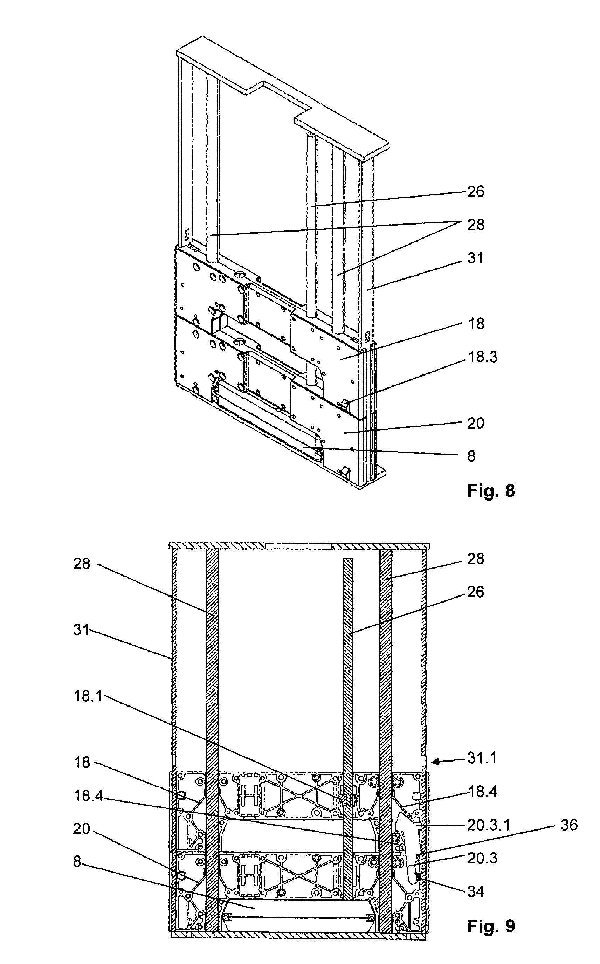

Fig. 4 zeigt die Tragvorrichtung 18 in der Ruhelage; die Oberseite des Gargeräts 1 schließt fast bündig mit der Oberseite der Arbeitsplatte 2 ab. Wie aus Fig. 4 deutlich hervorgeht, liegen die Abstellplatte 20 mit der Deckplatte 20.2 und die Heizeinheit 16 mit deren Unterseite in der dargestellten Ruhelage der Tragvorrichtung 18 im Wesentlichen aneinander an. Der Antrieb 8 treibt eine in den Fig. 8-13 näher dargestellte Gewindestange 26 an. Die Tragvorrichtung 18 ist über eine Hülse 18.1 mit der Gewindestange 26 kraftübertragend verbunden, so dass die Drehbewegung der Gewindestange 26 in eine translatorische Bewegung der Tragvorrichtung 18 umgewandelt wird. Um ein Verkanten der Tragvorrichtung 18 bei der Bewegung zu verhindern, ist die Tragvorrichtung 18 über weitere Hülsen 18.2 an zwei Führungsrohren 28 geführt. Die ganze Mimik zur Verstellung der Tragvorrichtung 18 ist in einem Gehäuse 31 des Gargeräts 1 angeordnet, so dass es auch möglich ist, das Gargerät 1 gemäß dem vorliegenden Ausführungsbeispiel auch nur an einer Arbeitsplatte 2 anzuordnen. Bei anderen Ausführungsformen ohne Gehäuse 31 wäre nur ein Einbau in ein anderes Möbel, beispielsweise einen Küchenunterschrank, möglich. Der gestrichelte Pfeil 24.1 in Fig. 4 symbolisiert die Signalübertragungsverbindung zwischen dem Magnetschalter 22 und der elektrischen Steuerung 24.

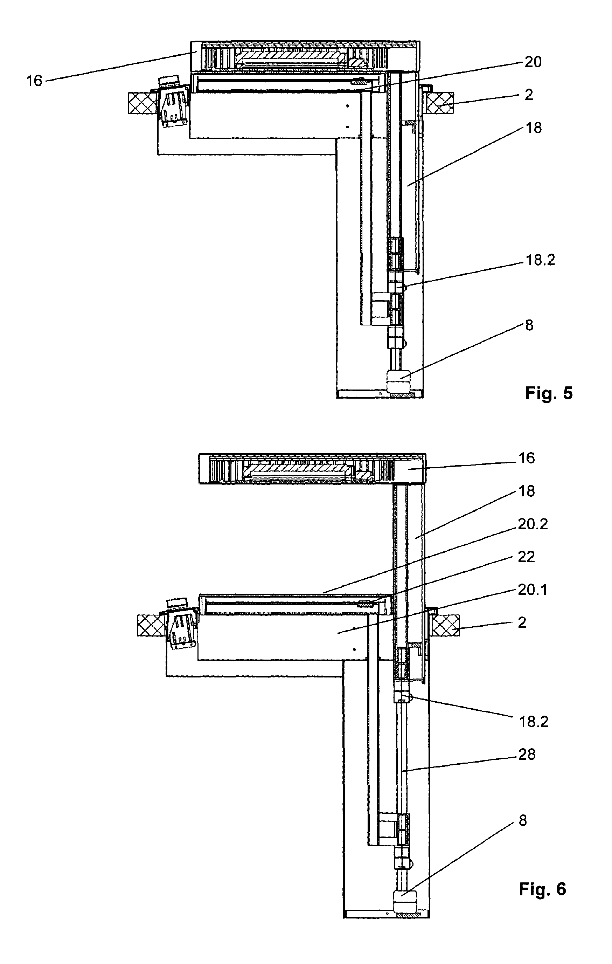

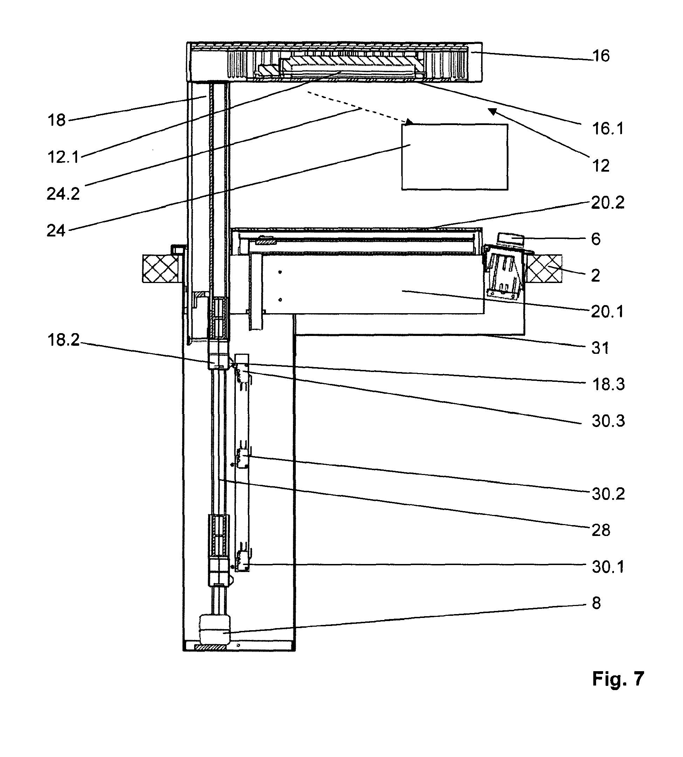

Fig. 5 bis 7 zeigen im Unterschied zur Fig. 4 das Gargerät 1 in einer Zwischenlage, siehe Fig. 5, und einer möglichen Betriebslage, siehe Fig. 6 und 7. Aus der Zusammenschau der Fig. 4 bis 7 geht deutlich hervor, dass die Abstellplatte 20 und die Heizeinheit 16 in der Ruhelage und auch noch in der Zwischenlage eng aneinander anliegen; während die Fig. 6 und 7 bereits zeigen, dass sich die Heizeinheit 16 bei der Überführung in eine Betriebslage der Tragvorrichtung 18 bezogen auf die Blattebene weiter nach oben bewegt, während die Abstellplatte 20 in der Lage von Fig. 5 verbleibt.

Fig. 7 zeigt das Gargerät 1 in einer geschnittenen Ansicht, mit Blickrichtung auf die im Vergleich zur Fig. 6 andere Seite des Gargeräts 1. In dieser Darstellung sind auch die als Mikroschalter ausgebildeten Lagesensoren 30.1, 30.2 und 30.3 erkennbar. Die Mikroschalter 30.1 bis 30.3 werden durch eine an der Tragvorrichtung 18 angeordnete Betätigungsnoppe 18.3 betätigt. Hierdurch ist auf konstruktiv einfache und robuste Weise eine Sensorik zur Feststellung der Lage der Tragvorrichtung 18, nämlich der Höhenlage der Tragvorrichtung 18, geschaffen.

Bei der Überführung der Tragvorrichtung 18 von der Ruhelage in eine der möglichen und durch den Benutzer mittels des Bedienknebels 6 frei wählbaren Betätigungslagen, wie durch die Abfolge der Fig. 4 bis 7 im Zeitraffer dargestellt, wird durch die Betätigung des Lagesensors 30.3, also des in der Blattebene obersten Mikroschalters, durch die Betätigungsnoppe 18.3 der durch den Bedienknebel 6 eingeschaltete Antrieb 8 wieder automatisch ausgeschaltet; die maximal mögliche Höhenlage der Tragvorrichtung 18 ist erreicht.

Durch eine oben näher erläuterte Betätigung des Bedienknebels 6 entgegen dem Uhrzeigersinn wird der Antrieb 8 automatisch wieder eingeschaltet; jetzt in die Gegenrichtung drehend, so dass die Tragvorrichtung 18 von der maximal möglichen Betriebslage wieder in Richtung der Ruhelage überführt wird. Analoges gilt auch für die anderen möglichen Betriebslagen der Tragvorrichtung 18. Sobald die Betätigungsnoppe 18.3 bei der Überführung in die Ruhelage den Lagesensor 30.2, also den mittleren Mikroschalter, betätigt, wird das Signal eines die Temperatur der Heizung 12 und damit der Heizeinrichtung 16 erfassenden Temperatursensors 12.1 von der elektrischen Steuerung 24 automatisch ausgewertet. Siehe hierzu auch den gestrichelten Pfeil 24.2 in Fig. 7, der die Signalübertragungsverbindung zwischen dem Temperatursensor 12.1 und der elektrischen Steuerung 24 symbolisiert. Beträgt die gemessene Temperatur mehr als eine vorher festgelegte Schalttemperatur von hier etwa 65°C wird der Antrieb 8 automatisch ausgeschaltet; gleiches gilt für den Fall, wenn die Temperatur gleich der Schalttemperatur ist. Liegt die Temperatur unter der Schalttemperatur von etwa 65°C kann die Tragvorrichtung 18 auf die oben bereits erläuterte Weise weiter in Richtung Ruhelage bewegt werden, bis schließlich die in Fig. 4 dargestellte Ruhelage erreicht ist. In der Ruhelage betätigt die Betätigungsnoppe 18.3 den untersten Mikroschalter, also den Lagesensor 30.1, mittels dem der Antrieb 8 wieder ausgeschaltet wird.

Für den Fall, dass die durch den Temperatursensor 12.1 gemessene Temperatur zum Zeitpunkt der Betätigung des Lagesensors 30.2 gleich oder höher als etwa 65°C ist, wird der Antrieb automatisch ausgeschaltet. Somit kann die Tragvorrichtung 18 bei höheren Temperaturen nicht weiter in Richtung Ruhelage verfahren werden; die Oberseite der Deckplatte 20.2 und die Unterseite der Heizeinrichtung 16 sind hier etwa 65 mm voneinander beabstandet. Der Antrieb 8 ist über den Bedienknebel 6 erst dann wieder einschaltbar, wenn die Temperatur der Heizung 12 unter 65°C gesunken ist. Der weitere Ablauf ist wie oben beschrieben.

Ob die Temperatur unter 65°C gesunken ist wird dem Benutzer durch eine an der Bedienblende 4 angeordnete und als Leuchtanzeige ausgebildete Restwärmeanzeige 32 angezeigt. Sobald die durch den Temperatursensor 12.1 gemessene Temperatur kleiner als 65°C ist, erlischt die Beleuchtung der Restwärmeanzeige 32. Bei höheren Temperaturen leuchtet die Restwärmeanzeige 32 hingegen auf.

Um die Sicherheit gegenüber einem ungewünschten Absenken der Tragvorrichtung 18 weiter zu verbessern ist hier noch ein zusätzlicher Temperatursensor in Form eines Temperaturbegrenzers 12.2 vorgesehen. Die Verwendung des Temperaturbegrenzers 12.2 bietet hier noch zusätzlich eine Sicherheit gegen Kabelbruch, da der Strompfad des Temperaturbegrenzers 12.2 im Normalfall und bei einer Temperatur der Heizeinheit 16 von weniger als 65°C geschlossen ist. Sollte ein Kabelbruch vorliegen, ist der Strompfad geöffnet und der Temperaturbegrenzer 12.2 wirkt redundant zu dem bereits ausführlich erläuterten Temperatursensor 12.1. Die weitere Funktionsweise des Temperaturbegrenzers 12.2 ist analog zu dem Temperatursensor 12.1.

Ferner wird bei dem vorliegenden Ausführungsbeispiel in der elektrischen Steuerung 24 der Stromanstieg des Antriebs 8 zur automatischen Steuerung des Antriebs 8 und damit der Bewegung der Tragvorrichtung 18 ausgewertet. Ist beispielsweise auf der Oberseite der Heizeinheit 16 bei in der Ruhelage befindlicher Tragvorrichtung 18, siehe Fig. 4, ein schwerer Gegenstand abgelegt worden und möchte der Benutzer die Tragvorrichtung 18 auf die oben erläuterte Weise in eine Betriebslage überführen, wird dies auf dem Fachmann bekannte Weise in der elektrischen Steuerung 24 durch einen Stromanstieg bei der Bestromung des Motors des Antriebs 8 automatisch erkannt und der Antrieb 8 automatisch ausgeschaltet. Im umgekehrten Fall, also wenn der Benutzer die Tragvorrichtung 18 von einer Betriebslage, siehe Fig. 6 oder 7, in die in Fig. 4 dargestellte Ruhelage überführen möchte und der Benutzer aufgrund von Unachtsamkeit einen Finger oder die Hand in den Raum zwischen der Abstellplatte 20 und der Heizeinrichtung 16 hält, schaltet die elektrische Steuerung 24 den Antrieb 8 in analoger Weise aus. In dem letztgenannten Fall, also wenn der Antrieb 8 bei der Überführung der Tragvorrichtung 18 in die Ruhelage ausgeschaltet wird, wird der Antrieb 8 auf dem Fachmann bekannte Weise von der elektrischen Steuerung 24 derart angesteuert, dass die Tragvorrichtung 18 sich wieder ein wenig in die Gegenrichtung, also in Richtung der Betriebslage, bewegt. Dies ist hier dadurch realisiert, dass der Antrieb 8 nach der automatischen Erkennung des ungewünschten Stromanstiegs ausgeschaltet wird und anschließend für eine vorher festgelegte Zeitdauer mit umgekehrter Drehrichtung wieder eingeschaltet wird.

In beiden Fällen führt die Erkennung eines Stromanstiegs, der jeweils über einen vorher festgelegten Maximalwert liegt, zu einem sofortigen Ausschalten des Antriebs 8, so dass die Tragvorrichtung 18 nicht weiter bewegt wird. Hierdurch ist auf schaltungstechnisch einfache Weise sowohl ein Überlastschutz wie auch ein Klemmschutz verwirklicht und damit die Sicherheit vor einem Personen- oder Sachschaden weiter verbessert.

Die Abläufe bei der Bewegung der Tragvorrichtung 18 sind für das vorliegende Ausführungsbeispiel aus den Fig. 8 bis 13 ersichtlich, die nachfolgend näher erläutert werden.

Fig. 8 zeigt das Gargerät 1 teilweise und mit Blick auf die Tragvorrichtung 18 in der Ruhelage, also in der in den Fig. 1 und 4 bereits dargestellten Lage. Wie bereits erläutert, ist die Heizeinrichtung 16 fest mit der Tragvorrichtung 18 verbunden, so dass die Heizeinrichtung 16 in vertikaler Richtung, also in der Bildebene von Fig. 9 parallel zur Längskante des Blattes, an der Tragvorrichtung 18 fixiert ist. Die Abstellplatte 20 ist über einen Riegel 20.3 an der Tragvorrichtung 18 und damit an der Heizeinrichtung 16 kraftübertragend angekuppelt, was aus Fig. 9 deutlich hervorgeht. Hierzu weist die Tragvorrichtung 18 eine Art Schlossfalle 18.4 auf, die hier als ein Zylinderstift ausgebildet ist und in die der Riegel 20.3 im angekuppelten Zustand eingreift. Der Riegel 20.3 ist über ein als Spiralfeder ausgebildetes Federelement 34 in der in Fig. 9 dargestellten Lage derart vorgespannt, dass eine Drehbewegung des Riegels 20.3 im Uhrzeigersinn um die Drehachse 36 hierdurch gefördert ist. Somit bilden der Riegel 20.3 und die Schlossfalle 18.4 eine Kupplung, durch die die Heizeinrichtung 16 und die Abstellplatte 20 in Abhängigkeit der Höhenlage der Tragvorrichtung 18 lösbar verbunden sind.

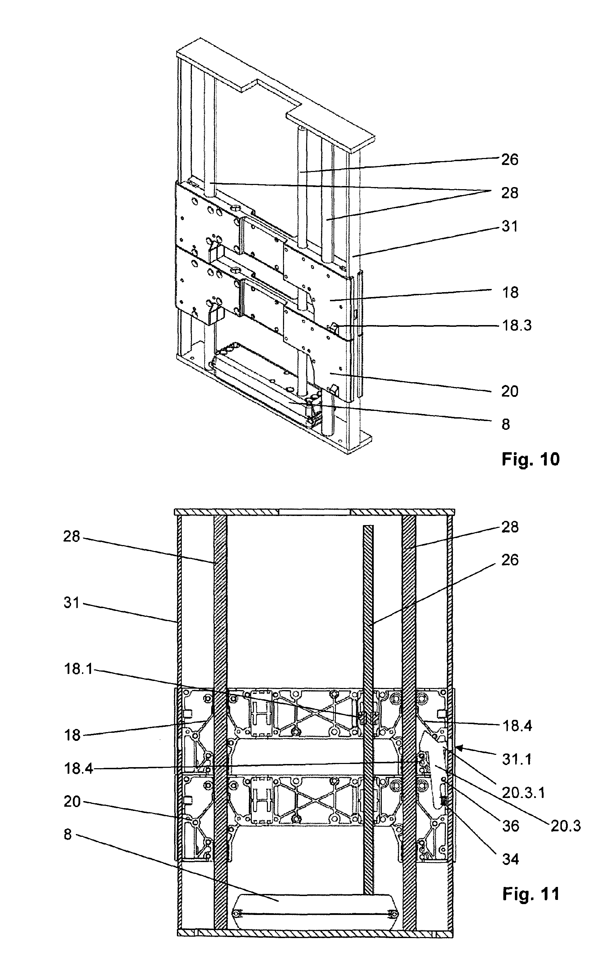

Die Fig. 10 und 11 zeigen das Gargerät 1 in teilweiser Darstellung und mit Blick auf die Tragvorrichtung 18 in analoger Darstellung zu den Fig. 8 und 9 in der in Fig. 5 bereits dargestellten Zwischenlage zwischen Ruhelage und Betriebslage. In dieser Lage der Tragvorrichtung 18 befindet sich der Riegel 20.3 mit einer daran angeordneten Nase 20.3.1 auf Höhe einer zur Nase 20.3.1 korrespondierend ausgebildeten Öffnung 31.1 im Gehäuse 31. Durch die Öffnung 31.1 bewegt sich der mittels der Spiralfeder 34 vorgespannte Riegel 20.3 im Uhrzeigersinn um die Drehachse 36, so dass der Riegel 20.3 mit der Nase 20.3.1 in die Öffnung 31.1 eingreift. Diese Drehbewegung läuft gleichzeitig mit der, bezogen auf die Bildebene von Fig. 11, weiteren Aufwärtsbewegung der Tragvorrichtung 18 ab, so dass der Riegel 20.3 währenddessen außer Eingriff mit der Schlossfalle 18.4 gelangt.

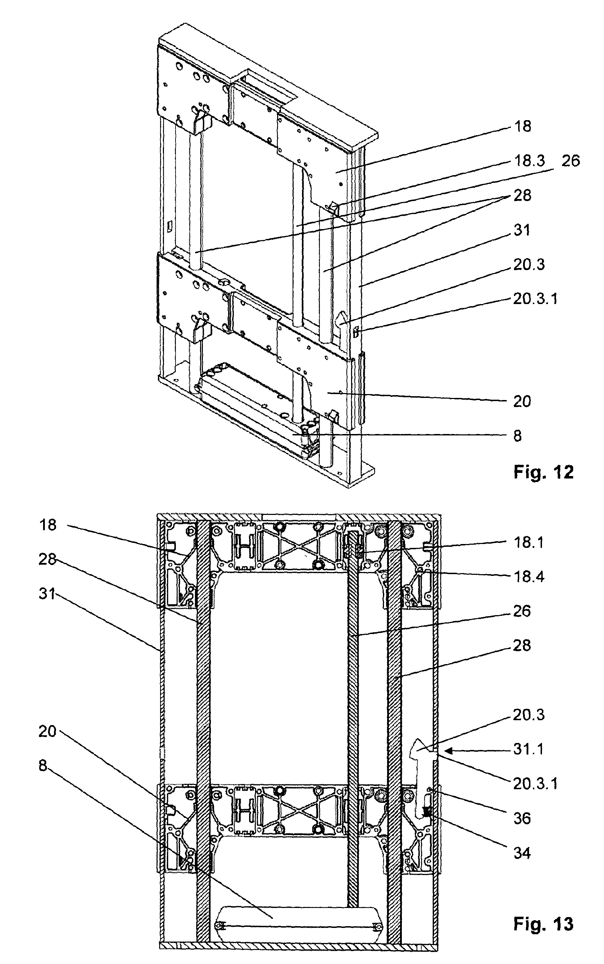

Die aus dem Riegel 20.3 und der Schlossfalle 18.4 gebildete Kupplung ist gelöst; die Abstellplatte 20 bleibt durch die nun vorliegende Verriegelung des Riegels 20.3 mit dem Gehäuse 31 in der Höhenlage fixiert, siehe auch Fig. 5. Die Heizeinrichtung 16 wird durch die Tragvorrichtung 18 auf die oben erläuterte Weise in der Bildebene von Fig. 11 weiter nach oben bewegt. Siehe auch die Fig. 6 und 7 in Verbindung mit den Fig. 12 und 13.

Diese Aufwärtsbewegung der Heizeinrichtung 16 wird, wie oben bereits beschrieben, entweder durch den Benutzer mittels einer Betätigung des Bedienknebels 6 gestoppt, oder durch die Betätigung des Lagesensors 30.3 mittels der Betätigungsnoppe 18.3.

Bei der Überführung der Tragvorrichtung 18 von einer der möglichen Betriebslagen in die Ruhelage wird die oben erläuterte Abfolge in umgekehrter Reihenfolge durchlaufen. Die an der Tragvorrichtung 18 befestigte Heizeinrichtung 16 fährt in der Bildebene von Fig. 13 nach unten. Sobald die Tragvorrichtung 18 die Höhenlage gemäß Fig. 11 erreicht hat, gelangt der Riegel 20.3 in Eingriff mit der Schlossfalle 18.4. Die Schlossfalle 18.4 zieht bei der weiteren Abwärtsbewegung der Tragvorrichtung 18 den Riegel 20.3 entgegen der Federkraft der Spiralfeder 34 mit der Nase 20.3.1 aus der Öffnung 31.1 des Gehäuses 31 heraus. Dabei wird der Riegel 20.3 im Gegenuhrzeigersinn um die Drehachse 36 gedreht. Die aus Riegel 20.3 und Schlossfalle 18.4 gebildete Kupplung von Abstellplatte 20 und Heizeinrichtung 16 ist wieder hergestellt. Sowohl Heizeinrichtung 16 wie auch die Abstellplatte 20 werden ab dieser Höhenlage der Tragvorrichtung 18 gemeinsam weiter nach unten bewegt.

Auch diese Abwärtsbewegung wird, wie bereits erläutert, entweder durch den Benutzer mittels einer Betätigung des Bedienknebels 6, oder durch die Betätigung des Lagesensors 30.1 mittels der Betätigungsnoppe 18.3 gestoppt.

Die Erfindung ist nicht auf das vorliegende Ausführungsbeispiel beschränkt. Beispielsweise sind auch andere dem Fachmann bekannte und geeignete Kupplungen denkbar, um die Abstellplatte mit der Heizeinrichtung in Abhängigkeit der Höhenlage der Tragvorrichtung miteinander zu koppeln. Alternativ zu der vorgeschlagenen Kopplung ist es auch denkbar, dass die Tragvorrichtung zweiteilig ausgebildet ist, wobei ein Teil die Abstellplatte und das andere Teil die Heizeinrichtung hält und beide Teile der Tragvorrichtung durch separate Antriebe in der Höhe, also in vertikaler Richtung, bewegbar sind. Auch sind die verwendeten Lage- und Temperatursensoren nach Art und Anordnung in weiten geeigneten Grenzen wählbar. Gleiches gilt für das Federelement, das nach Art, Federkonstante und Anordnung in weiten geeigneten Grenzen frei wählbar ist. Anstelle des hier verwendeten elektrischen Antriebs sind auch andere dem Fachmann bekannte automatische oder auch manuelle Antriebe grundsätzlich denkbar.

## Patentansprüche

1. Gargerät (1) zur Anordnung an einer im Wesentlichen horizontal verlaufenden Arbeitsplatte (2) oder dergleichen, mit einer Tragvorrichtung (18), an der eine Abstellplatte (20) für Gargüter und eine Heizeinheit (16) angeordnet sind, wobei die Tragvorrichtung (18) mittels eines manuellen oder automatischen Antriebs (8) im Wesentlichen vertikal zur Arbeitsplatte (2) zwischen einer Ruhelage und einer Betriebslage hin und her bewegbar ist,
**dadurch gekennzeichnet,**
**dass** in der Ruhelage zumindest die Abstellplatte (20) eine geringere Höhenlage als die Arbeitsplattenoberseite aufweist und die Abstellplatte (20) und die Heizeinheit (16) relativ zueinander beweglich an der Tragvorrichtung (18) gehalten sind.

2. Gargerät (1) nach Anspruch 1,
**dadurch gekennzeichnet,**
**dass** die Abstellplatte (20) oder die Heizeinheit (16) in vertikaler Richtung fixiert an der Tragvorrichtung (18) befestigt ist.

3. Gargerät (1) nach Anspruch 1 oder 2,
**dadurch gekennzeichnet,**
**dass** die Abstellplatte (20) und die Heizeinheit (16) über eine Kupplung (18.4, 20.3) und in Abhängigkeit der Höhenlage der Tragvorrichtung (18) lösbar verbunden sind.

4. Gargerät (1) nach Anspruch 3,
**dadurch gekennzeichnet,**
**dass** die Kupplung (18.4, 20.3) an der Abstellplatte (20) oder der Heizeinheit (16) einen Riegel (20.3) aufweist, der über ein Federelement (34) in Richtung der Entriegelungslage vorgespannt ist.

5. Gargerät (1) nach mindestens einem der Ansprüche 1 bis 4,
**dadurch gekennzeichnet,**
**dass** die Abstellplatte (20) und die Heizeinheit (16) in der Ruhelage der Tragvorrichtung (18) im Wesentlichen aneinander anliegen.

6. Gargerät (1) nach mindestens einem der Ansprüche 1 bis 5,
**dadurch gekennzeichnet,**
**dass** die Höhenlage der Tragvorrichtung (18) mittels zumindest eines Lagesensors (30.1, 30.2, 30.3) erfassbar und in Abhängigkeit der Messsignale mittels einer elektrischen Steuerung (24) des Gargeräts (1) die Heizung (12) der Heizeinheit (16) schaltbar ist.

7. Gargerät (1) nach mindestens einem der Ansprüche 1 bis 6,
**dadurch gekennzeichnet,**
**dass** der Antrieb (8) als ein elektrischer Antrieb ausgebildet ist, der über ein Bedienelement (6) einschaltbar ist.

8. Gargerät (1) nach Anspruch 7,
**dadurch gekennzeichnet,**
**dass** die Temperatur der Heizeinheit (16) mittels eines Temperatursensors (12.1, 12.2) erfassbar und in Abhängigkeit der Messsignale mittels der elektrischen Steuerung (24) des Gargeräts (1) der Antrieb (8) der Tragvorrichtung (18) schaltbar ist.

9. Gargerät (1) nach Anspruch 7 oder 8,
**dadurch gekennzeichnet,**
**dass** die Abstellplatte (20) einen Unterbau (20.1) und eine darauf auflegbare Deckplatte (20.2) aufweist, wobei der Strompfad zum Antrieb (8) und zur Heizung (12) bei nicht aufgelegter Deckplatte (20.2) auch bei in Einschaltlage befindlichem Bedienelement (6, 10) unterbrochen ist.

10. Gargerät (1) nach mindestens einem der Ansprüche 7 bis 9,
**dadurch gekennzeichnet,**
**dass** der eingeschaltete Antrieb (8) in Abhängigkeit des Stromanstiegs automatisch ausschaltbar ist.
